# EUROPEAN PATENT SPECIFICATION

(11) **EP 2 585 744 B1**
(45) Date of publication and mention of the grant of the patent: **21.02.2018**
(21) Application number: 11714816.3
(22) Date of filing: 05.04.2011
(51) Int. Cl.: F16K 31/00, A01G 25/16, A01G 27/00

(54) **DEVICES CONTAINING SWELLABLE MATERIAL AND FLOW APPARATUS INCORPORATING SUCH DEVICES**
VORRICHTUNGEN MIT EINEM QUELLBAREM MATERIAL UND STRÖMUNGSGERÄT MIT DERARTIGEN VORRICHTUNGEN
DISPOSITIFS CONTENANT UNE MATIÈRE CAPABLE DE GONFLER ET APPAREILS D'ÉCOULEMENT COMPORTANT DE TELS DISPOSITIFS

(30) Priority: 28.06.2010 GB 201010799
(43) Date of publication of application: 01.05.2013
(73) Proprietor: Garden Innovation Mail Order Limited, Haywards Heath, West Sussex RH17 6JY (GB)
(72) Inventor: GRAHAM, Neil Bonnette, Glasgow, Strathclyde G61 3NY (GB); ANDERSON, David John, Glasgow, Strathclyde G61 2AT (GB); MARTIN, Charles, East Kilbride, Strathclyde G75 0JU (GB)
(74) Representative: Lawrie, Donald James
(86) International application number: PCT/GB2011/050674
(87) International publication number: WO 2012/001380

(56) References cited:
- WO-A1-98/01021
- WO-A2-89/11787
- DE-A1- 2 325 980
- US-A- 2 734 521

## Description

### Field of the Invention

This invention relates to devices utilising swellable materials for effecting motion of elements in the devices. Such devices may be sensors, transducers, valves, more particularly moisture-sensitive control valves, for control of fluid flow. The invention also relates to methods of promoting plant growth using such devices for control of fluid flow and to apparatus for use in such methods.

### Background to the Invention

Valves which utilise a moisture sensitive material to control flow between an inlet and an outlet of the valve are known for example from document WO-A-98/01021. The moisture sensitive material absorbs moisture and swells and this swelling is used to close the valve. Drying of the moisture sensitive material causes it to contract and this contraction in turn is used to open the valve. These valves are particularly (but not exclusively) useful for plant growing systems in which water for the plants needs to be accurately controlled, so that the plants do not become too dry due to lack of water or suffer from overwatering. In such an implementation, the valve is operatively positioned within a reticulation system and in the vicinity of the plants and operates to control the feed of water to the plants through the system.

Where plants, e.g. crops, are grown on a commercial scale, the maintaining of the correct water and nutrient supply needs much attention. It also requires much financial investment in apparatus even where water supply is adequate. In those parts of the world having low rainfall, water conservation is also important and losses by evaporation can be considerable. It will be understood that in a controlled cultivation of plants it is necessary to supply water, but that the water supply can be treated to introduce nutrients such as trace elements, essential minerals, salts such as phosphates, nitrates and sulphates, together with other growth promoters. Thus hereinafter reference to fluids includes water and aqueous solutions containing additives for such purposes.

### Summary of the Invention

This invention provides *inter alia* an improved moisture-sensitive device e.g. a valve which is useful over a wider range of operating pressures, and thus is even suitable for use in systems operating at water mains pressure. The device is suitable for use in the management of watering systems for container-grown plants and hydroponic systems. This invention offers the opportunity to provide a watering system fed from mains water supply, optionally via additional components such as a pressure regulator or together with a pressure reducing valve if necessary. The device may be used as a valve for control of flow within a plant irrigation or water reticulation system. Several of the devices can be incorporated at different parts of a water supply distribution system which may extend over a large area to serve numerous plants needs.

The device responds to contact with moisture in the air or aqueous media without requiring user intervention to operate it and so it has sensor capability. A water supply to a distribution system is thus controlled by the device by the demand indicated by low ambient moisture levels or depleted water levels.

Therefore the invention is particularly suitable for use in soilless cultivation of plants, or hydroponics which typically relies on aqueous fluids alone to supply all nutritional needs for the plants without requiring the presence of a conventional growth medium. However the invention is useful for both aqueous solution culture methods and those which adopt some form of inert medium e.g. rockwool, into which the nutrient fluid is introduced for the growing plant. Good results are obtainable using a potting material to promote strong root structure such as sterilised soil, peat, proprietary horticultural compost like "John Innes" compost or peat-free composts e.g. containing coconut fibre or the like fibrous materials or inert materials like perlite, vermiculite etc.

The device of this invention offers a valve which is superior to known linear movement obturator valves which incorporate a swellable material as a valve actuator for effecting movement of a fluid-impermeable diaphragm as the obturator element by, in one aspect, provision of an additional component operatively disposed between the swellable material and the fluid-impermeable diaphragm and configured to promote sealing of the fluid-impermeable diaphragm upon a seating surface in the valve.

Thus according to the invention, there is provided a flow control device as defined in claim 1. Said device comprises a body adapted for fluidic connection to a fluid flow system, said body defining an internal chamber and configured to pass flow of fluid through the chamber via at least one aperture in the body, an obturator element positioned in the chamber and adapted to close upon the at least one aperture, an actuator element juxtaposed with the obturator element and formed of a material which swells when in contact with fluid and contracts in the absence of said fluid, whereby upon introduction of fluid to the chamber, the actuator element swells and effects closing of the obturator element upon the at least one aperture, and wherein the device further comprises a valve disc component disposed between the actuator element and the obturator element and configured to bear upon the obturator element and facilitate closure thereof upon the at least one aperture.

The presence of the valve disc component provides for more effective application of pressure developed as the actuator element swells in response to contact with moisture. Whereas the obturator element is flexible and conformable to close about the aperture, the valve disc component in comparison is inflexible and non-deformable in the envisaged use. Thus the latter retains its shape in normal usage to allow it to confine the swellable actuator element within its intended operational position and transmit the pressure developed by swelling more effectively to the obturator element than would be the case where the obturator element is in direct contact with the swollen actuator element.

Selection of materials for the components of the device is on the basis of suitability for use with a hydroponics fluid and having regard to such factors as humidity, corrosion and toxicity avoidance, and so the body can be optionally made of a plastics material such as polyethylene, polypropylene, nylon or polystyrene, or a suitable non corrosive metal, e.g. brass, stainless steel, aluminium alloy such as the age-hardenable aluminium alloy with about 4% copper (duralumin).

The obturator element is typically a moisture-impermeable flexible plastics film such as polyethylene, polypropylene and polyvinylchloride. Synthetic rubbers, e.g. silicone rubbers are also suitable. Where a metal body is used, the obturator element may be fabricated with an integral supporting and sealing ring. According to the invention the valve disc component is a concave dish or shallow cup superposed over the actuator element and typically configured to confine the swollen actuator within its boundaries so that the swelling pressure effect is transmissible via the valve disc component on to the obturator element to thereby realise improved sealing of the obturator element about the at least one aperture.

High modulus water resistant polymers with or without fibre or particulate reinforcement as well as ceramics and glasses are also suitable materials which can be manufactured into small domed discs by techniques well known to those skilled in the art.

Typically, the chamber has both an inlet aperture and an outlet aperture in one surface within the chamber, so that the obturator element may overlie and close off both apertures, especially the former.

The chamber may have multiple outlet apertures, or an outlet manifold to deliver fluid to several devices such as multiple drippers or spray nozzles, and may be adapted to connect with small bore tubing for distribution in a reticulation system.

Advantages of use of the valve disc component include the following:
The swellable actuator element, when presented as a gel pill, disc, toroidal or O-ring shape is better centred within the chamber by being positioned within the preferred concave dished form of the valve disc whereby upon swelling the expanding surface is confined within the valve disc leading to more effective action upon the obturator element.

Optionally, a part of the body may have a protuberance on an inner surface configured to contact the actuator element and facilitate centring thereof within the chamber. A central lug for example may in assembly of the body enter the central space in an O-ring shaped actuator and act as a physical restraint against undesirable displacement of the actuator.

Another optional feature would be to provide an elevated seat for the obturator so that as the actuator swells, as before the dished valve component bears upon the obturator element which is urged against the seat whereby improved sealing may be achievable upon the elevated seat.

In an embodiment, the device comprises a body with a base and upstanding side wall(s) defining a chamber therebetween and a closure element for the chamber to complete assembly after insertion of the swellable actuator element, the flexible obturator element and the valve disc component into the chamber. Conveniently, the body is adapted for fluidic connection to a fluid flow system by provision of at least one inlet aperture and at least one outlet aperture, said apertures being so located in the body to define in conjunction with the chamber a flow path through the device, and there is at least one vent aperture to permit fluid vapour exchange from the chamber with ambient air. The at least one vent aperture allows under arid ambient conditions for the swellable actuator element to release fluid into the atmosphere by evaporation and contract whereby the obturator element may be lifted by inlet fluid pressure and through flow to the outlet resumed. Conversely when the atmosphere is moisture laden or if the vented surface is immersed in water, the swellable actuator element remains swollen and the flow of unnecessary fluid is inhibited. In this way the device both acts as a sensor for conditions under which a growing plant will require more fluid and also the means for regulating the supply thereof.

The preferred actuator material is any of the materials referred to as a "hydrogel" or "zerogel" the former term referring to the hydrated material and the latter term to the dehydrated material. For convenience, the term "hydrogel" will be used hereinafter.

The design of the hydrogel aims to deliver sufficient swelling to ensure adequate response but avoid excessive swelling since with increased swelling, the strength of the swollen hydrogel is diminished, which loss of strength would lead to loss of effectiveness in its actuator role. Preferably therefore, a hydrogel is used which has a maximum swelling (at 20°C.) of up to 10 times its dry size, for example up to 5 times its dry size. Preferred maximum swelling is between 2 and 5 times dry size, e.g. between 2 and 3 times. Generally speaking, a hydrogel swelling less than 20 times its dry weight with water is used.

Conveniently, the hydrogel may be used in the form of a flat sheet, preferably a disc typically about the size of a shirt button in most cases (typically of the order of 5 to 10 mm across), which may simply be placed in the chamber as the valve is assembled. For a particularly rapid response valve, there may be used a thinner disc of a rigid dry hydrogel disc (zerogel) to promote rapid and effective fluid flow cut off.

The hydrogels can be of natural or synthetic organic or inorganic material. They are normally made of water soluble backbone materials which are rendered insoluble by the introduction of covalent or physical crosslinks e.g. addition polymers of hydroxy alkyl(meth)acrylates, methyl vinyl ether, (meth)-acrylamide, N-vinyl pyrrolidone, (meth)acrylic acid and its salts, N-vinyl and C-vinyl pyridines and salts thereof with poly(meth)acrylates such as glycol dimethacrylate. There may also be used crosslinked natural polymers such as collagen or starch and cellulose derivatives, and crosslinked synthetic polymers such as polyvinyl alcohol.

Useful hydrogels for the device of this invention include a crosslinked poly(ethylene glycol or ethylene oxide). Suitable crosslinked materials can be prepared by reacting poly(ethylene oxide) or poly(ethylene glycol) with a polyol (e.g. 1,2,6-hexantriol) and a polyisocyanate (e.g. diphenylmethane 4,4'-diisocyanate). Further there may be used insoluble domains (block copolymers of e.g. polyethylene oxide with water-insoluble urethane blocks) or materials rendered insoluble by entanglement crosslinking (high molecular weight poly(ethylene oxides)) with divinylbenzene or by crystallinity (cellulosic materials and polyvinyl alcohols). The most preferred hydrogel for use according to the present invention is a cross linked, partially crystalline poly(ethylene oxide).

A particular advantage of the present invention is the simplicity of construction of the valve. The valve will generally comprise just five parts; two body portions defining the flow-through chamber, the flexible film of the obturator element, the shape-retaining concave pressure distribution component, and the swellable actuator for example a disc of hydrogel. Both body portions are conveniently injection moulded and the other parts introduced to the chamber before closure of the two portions, the hydrogel being sealed from the inlet and outlet by the flexible obturator element. Indeed, the two body portions can, if desired, be moulded as a single item and folded round, with the other components enclosed therebetween to form the assembled valve. Other designs utilising injection moulding or casting techniques to form the flow chamber in one part are contemplated.

Advantageously, the valve, when assembled, may be ultrasonically welded to join the two body portions together retaining the operative valve and actuator parts in place. Alternatively, the portions may be fixed together using heat or a suitable adhesive. A close tolerance snap-fit assembly is possible for lower fluid pressure systems.

Optionally, a sealing agent may be applied to contiguous surfaces of the assembly, which may be of the consistency of a grease or the like extrudable filler material. This is not usually necessary but may be used as a precaution against any possible air gaps remaining after assembly of the body. The sealing agent would be resistant to water flushing and should remain in place as a gap filler for extended periods of use of the valve. This is useful to improve sealing between press-fit assembled plastics components where it may compensate for minor variance in tolerances or other minor manufacturing imperfections.

Body portions may be made from any suitable thermoplastics material, but it is preferable that the two body portions are made of the same material for ease of ultrasonic welding. For example, any of polyethylene, polypropylene, nylon or polystyrene may be used. Preferably, the flexible obturator element is also made of the same material as the body portions, but it may be of a different grade. Alternatively, the parts forming the body can be machined or cast of a suitable non corrosive metal, brass, stainless steel, aluminium alloy (duralumin). Use of threaded components to form the body otherwise is also contemplated.

Suitably one of the body portions includes a plurality of apertures which allow water penetration or at least the environmental moisture to contact the hydrogel in the assembled valve.

The shape for the body is not critical, but a body with a curved side wall and flat end walls, e.g. a cylindrical body may be most suitable in most cases.

The embodiments described in our earlier patent EP 0 418 298 B1 can be adapted according to this invention by inclusion of a valve disc component same to be operatively interposed between the hydrogel and film described in the said patent for the purposes described herein.

The invention also provides apparatus for use in plant cultivation which apparatus comprises a container housing a plant growing medium comprising hydrogel particles, a supply line for feeding nutrient solution to the growing medium in the container, and a device according to the first aspect described above in the supply line, which device serves to close fluid supply when the water content of the hydrogel particles is above a predetermined level and open fluid supply when the water content is below the predetermined level. Thus it will be recognised that the system is volume-controlled. Such a system is self-regulating by vapour exchange between the ambient and the internal chamber of the or each control valve.

The container for the cultivation of the plants may be any suitable one. For example the growing medium may be housed in rigid, semi-rigid or flexible envelopes, troughs, e.g. dug in the ground, or pots of plastics, metal or natural materials such as clay, or other containers having an external or in-built reservoir which may be controlled. It is preferred that the growing medium should not, in use, have an appreciable exposed surface, especially in locations where water supply is restricted. In this way water loss by evaporation may be kept to a minimum.

A particularly convenient form of container is a plastics sack. A growing medium may be housed in the plastics sacks and holes are, e.g., pierced through the sack wall for planting the plants in the growing medium. Suitably the holes should be just large enough for this purpose. By keeping the hole size to a minimum, evaporation loss from the growing medium to the atmosphere can be kept to a minimum, which is especially important in high temperature/low rainfall countries.

If desired the container for the growing medium may itself be degradable.

The growing medium may consist entirely of hydrogel particles. However this may be considered as an expensive option. Thus generally the hydrogel will be mixed with at least one other growing medium. Preferably the hydrogel will be mixed with a nutritionally inert medium.

Growing media which can be used with the hydrogels include soil, peat based, chemical based, (e.g. polyformaldehyde or urea-formaldehyde) or mineral based (e.g. sand, gravel, perlite, bentonite, rockwool fibres, vermiculite or xeolite) materials. The mixed growing medium should also be hydroporous and capillarity is an important consideration for selecting an appropriate medium.

Generally speaking the growing medium will contain 0.5 to 100% by weight of hydrogel.

The ability of the growing medium to take up and release moisture, e.g. to the growing plants, is a further consideration. This ability may be expressed in terms of the moisture tension of the growing medium. The optimum moisture tension will vary according to the plant/medium combination. However, generally the preferred moisture tension for the growing medium would be approximately -0.01 megapascal (MPa). Depending on the crop/growing medium combination in practice this value is likely to be in the range -0.01 MPa to -0.03 MPa.

As mentioned above, the hydrogel used preferably should not be an excessively swelling type. Generally the hydrogel may have a degree of swelling, from dry, of less than 25 times and preferably between 5 and 10 times by volume with water. The hydrogel may be any suitable water-insoluble one with the required degree of swelling. The hydrogels can be of natural or synthetic organic or inorganic material. They are normally made of water soluble backbone materials which are rendered insoluble by the introduction of covalent crosslinks as described above.

Preferably there is used as hydrogel a crosslinked poly(ethylene glycol or ethylene oxide) as described above. Particularly preferred is the use of a cross-linked partially crystalline polyethylene oxide hydrogel. Particularly preferred hydrogels here are the crosslinked polyethylene oxides.

The fluid to be used may be an aqueous nutrient solution preferably containing all the ingredients or all the additional ingredients (i.e. those not present within any growing medium used) required by the plants for growth. In addition, it may be advantageous to include for example pesticides in the nutrient solution. An interesting aspect here is that it has been found that nutrient solutions of high salinity (say from 0.32pph to 3.3 pph) may be used according to the present invention and still yield good crops. This is particularly interesting in low rainfall areas where it may be possible to employ sea water, which would normally be fatal to the plants. Nutrients having a salt content of up to 0.32 pph have been used.

The swollen hydrogel particles within the container suitable for use with the present invention provide a support for the growing plant or plants and, as the nutrient medium is used up, this can readily be detected by a reduction of water content, and thus in swelling of the hydrogel particles. On detection of water content falling below a predetermined level, further nutrient solution is introduced into the container. Thus the invention offers a very easy plant growing method in which water loss may be kept to a minimum and which does not require expensive and complicated apparatus.

Suitable means for regulating and controlling the water content of the growing medium are described for example in European Pat. No. 0 004 159, same being suitable for use together with the devices of the present invention. Container(s) may contain growth media through which a fluid may permeate to satisfy nutritional requirements for the plants to be cultivated therein.

The containers may be in horticultural trays or troughs.

Conveniently, the containers and fluid supply may be assembled as a reticulation system configured to provide an improvement over the commonly used "flood and drain" watering regime. By use of the valve device of the invention, firstly the "flood" part of the cycle is controlled by valve opening and secondly it is possible to allow complete drying out of the horticultural tray between valve openings which assists in the aeration of the growth medium to promote good root growth and avoid "damping off" problems. Additionally, whereas in the conventional "flood and drain" system use of excess water and loss to drain is to be expected, in the new reticulation system incorporating devices according to the invention, waste of water is virtually eliminated because the "drain" part of the cycle is achievable through natural transpiration of the cultivated plant.

In such an improved system, a device of this invention, connected into the system may be placed in an horticultural tray, optionally lined with a capillary matting, and positioned such that the centre of the hydrogel actuator is typically approximately 1cm from the surface upon which the container(s) rest. Ideally, the positioning of the device is such that the hydrogel actuator can be exposed to ambient conditions of temperature and humidity. The watering cycle would start with an open valve configuration allowing the tray to flood until the interaction of water with the hydrogel actuator causes it to swell and close the obturator upon the supply inlet. As the plants use up water, the capillary matting dries out and then the hydrogel actuator will also tend to dry out whereupon fluid pressure re-opens the valve to admit more fluid to the matting start a new watering cycle.

The method and apparatus of the invention are suitable for use in growing a wide range of edible and non-edible crops e.g. for fresh or processed culinary and medicinal use. These include the following:
(1) salad crops e.g. tomatoes, cucumbers, peppers, lettuce, brassica species;
(2) root crops such as potatoes, carrots, beets
(3) cut flowers, e.g. chrysanthemum, carnation, alstromeria, gerbera, freesia;
(4) geophytes for ornamental or culinary use e.g. daffodils, crocus and onions;
(5) medicinal herbs
(6) culinary herbs, including basil, mint, chives and parsley
(7) nursery stock, i.e. trees and shrubs, ornamental foliage and flowering "pot plant" species;
(8) Animal fodder & feedstuffs

For a better understanding of the invention, reference will now be made, by way of example only, to the accompanying illustrative drawings and in the Examples which follow.

### Description of the Drawings:

Fig. 1 a is a sectional side elevation of a control valve of a known type in a flow-through condition;
Fig. 1b is a sectional side elevation of the known control valve of Fig. 1 a after the valve has closed to flow-through;
Fig. 2a is a sectional side elevation of a new control valve of this invention in a flow-through condition;
Fig. 2b is a sectional side elevation of the control valve of Fig. 2a after the valve has closed to flow-through;
Fig. 3 is a perspective view of a valve body showing detail of the vent apertures;
Fig. 4 is a sectional side elevation of a new control valve of this invention adapted to connect with fluid supply tubing;
Fig. 5 is a sectional side elevation of a new control valve of this invention configured to improve operational aspects including actuation and closure;
Fig. 6 is a sectional side elevation of a new control valve of this invention adapted to connect with fluid supply tubing and with optional outlet port banjo fitted;
Fig. 7 is a sectional side elevation of a new control valve of this invention adapted to connect with fluid supply tubing for through flow by provision of an integrated outlet port;
Fig. 8 is an exploded perspective view of a vertical mount support platform for a valve of this invention; and
Fig. 9 is a perspective view from above and to one end of a horizontal mount support platform fabricated from metal.

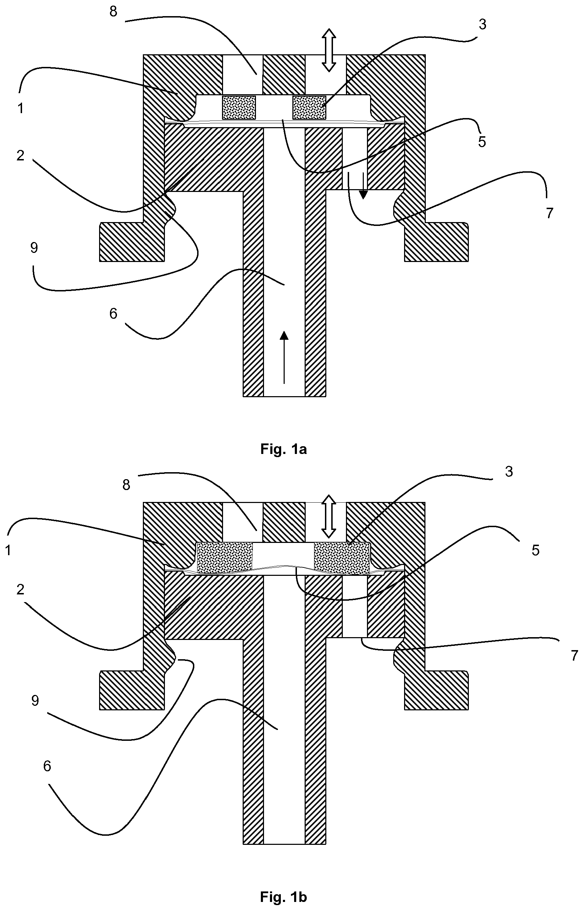

By way of illustrative comparison a hypothetical device useful as a sensor valve and having a functionality similar to that of the valve device taught in EP 0 418 298 B1 is schematically shown in Figs. 1 a and 1b. The device comprises a first body portion **1,** a second body portion **2,** a toroidal shaped hydrogel actuator element **3,** and a water impermeable flexible film forming an obturator element **5.**

The body portions 1, 2, would be moulded in plastics and generally circular in cross-section and would together define a cylindrical chamber for receiving the hydrogel actuator element 3, and the flexible film 5. The body portion 2 which would serve as a closure element for the chamber has an inlet duct **6** and an outlet **7** formed in it and these together with the available volume of the chamber beneath the flexible film 5 would form a through passage for flow of fluid. The body portion 1 has a substantially flat face in which are provided a plurality of vent ports **8.** The body portion 1 is open at the opposite side to receive the body portion 2, and has an inner ledge against which the latter may abut when assembled leaving a void space to form the chamber. Around the inner periphery of the open side of the body portion 1 a rib **9** is formed to serve as a snap-fit retainer for the body portion 2 when assembled therewith.

The water impermeable flexible film 5 would be arranged to overlie the flat inner surface of the body portion 2 so as to allow closure about the inlet aperture of the inlet duct 6, the film being otherwise secured to the said inner surface around its periphery and also extending across the outlet port 7.

### Description of Embodiments of the Invention

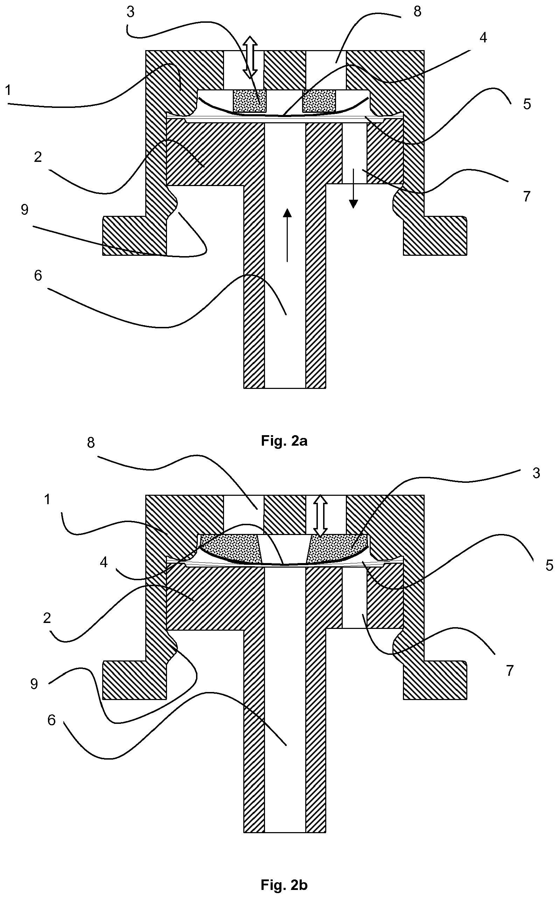

A first embodiment of a device useful as a sensor valve is schematically shown in Figs. 2a and 2b. For ease of comparison with the device of Figs. 1 a and 1b the same reference numerals are adopted for equivalent parts. The illustrated device comprises a first body portion **1,** a second body portion **2,** a toroidal shaped hydrogel actuator element **3,** a rigid concave valve disc component **4** and a water-impermeable flexible film forming an obturator element **5.**

The body portions 1, 2, moulded in plastics, are generally circular in cross-section and together define a cylindrical chamber for receiving the hydrogel actuator element 3, the valve disc component 4 and the flexible film 5. The body portion 2 which serves as a closure element for the chamber has an inlet duct **6** and an outlet **7** formed in it and these together with the available volume of the chamber beneath the flexible film 5 form a through passage for flow of fluid. The body portion 1 has a substantially flat face in which are provided a plurality of vent ports **8.** The body portion 1 is open at the opposite side to receive the body portion 2, and has an inner ledge against which the latter may abut when assembled leaving a void space to form the chamber. Around the inner periphery of the open side of the body portion 1 a rib **9** is formed to serve as a snap-fit retainer for the body portion 2 when assembled therewith.

The water impermeable flexible film 5 is arranged to overlie the flat inner surface of the body portion 2 so as to allow closure about the inlet aperture of the inlet duct 6, the film being otherwise secured to the said inner surface around its periphery and also extending across the aperture of outlet duct 7.

In a typical use the device may be connected into a reticulation or irrigation system to allow fluid supply to the inlet duct 6. Furthermore, in use, the film 5 is deflected into the chamber by the pressure of inlet water to allow communication between the inlet and outlet ducts, 6 and 7 respectively to be achieved.

The plurality of vent ports 8 (only two shown) bring the hydrogel actuator element 3 into communication with the environment in which the device is placed e.g. mounted in a tray or trough in the vicinity of a growing medium, and allow water penetration/drainage and moisture from that environment to contact the element 4 thereby causing it to swell or contract.

The device is assembled by placing the film 5 onto the inner face of body portion 2, presenting the concave dished valve component 4 to the film 5 so that the concave dished surface is uppermost, inserting the hydrogel actuator element 3 in the concave dished surface, and then superposing the other body portion 1 over the body portion 2. The plastics material is sufficiently resilient to allow a snap fit assembly. The body portion 2 engages the film 5 around its periphery to form a seal. The two body portions 1, 2 forming the device can be better secured together using heat or a suitable adhesive, or they can be secured together using ultrasonic welding techniques to improve sealing against high fluid pressures.

In use of the valve of Figs. 2a, 2b, the inlet 6 is connected to the fluid supply, e.g. a tube is connected to inlet 6 and a container for the fluid to be supplied, and e.g. a tube will be connected to outlet 7 to carry the fluid to where desired and the valve will be placed in the environment whose moisture content is to determine fluid flow. A particularly suitable application is supply of water or aqueous nutrient solution to growing plants in which case the valve will be placed in the proximity of the growing plant to allow it to be exposed to the ambient conditions experienced by the plant. Where the plant is positioned in a tray or trough for uptake of water or nutrient fluid from a standing volume in the tray or trough, the valve may be initially immersed in that standing volume until it is depleted by evaporation and uptake by the plants. When water level falls away the hydrogel material 3 will begin to dry out.

When the valve environment is of high ambient humidity, the hydrogel 3 in the valve will be maintained in its swollen condition by moisture contacting the toroidal shaped hydrogel 3 through vent ports 8. The swollen hydrogel actuator 3 will press against the concave surface of the valve disc component 4 and that in turn will bear upon the flexible film 5 to urge it down to close about the inlet aperture and thus close off the inlet 6 in the valve body portion 2. In this way the valve is closed with fluid being prevented from passing from inlet 6 to outlet 7 by means of the flexible film 5 sealingly pressed down over the inlet 6.

When the valve environment becomes dry, the hydrogel toroidal actuator 3 will give off water it has absorbed and contract in size. In this condition, the pressure acting on flexible film 5 to force it down over the inlet 6 is decreased to open the valve. Then fluid from inlet 6 is able to pass through from inlet 6 to outlet 7 and thus through the valve. On an increase of the valve environment moisture content, the hydrogel material 3 will swell again and force the disc 4 to again press film 5 down to seal inlet 6 and close the valve.

In comparison with the device of Figs. 1 a and 1b, the following points are notable.
1. Whereas in a device having the features shown in Figs. 1 a and 1b, the dry hydrogel element is free to move around within the valve chamber, on immersion in water it could start to swell from any position and not necessarily a central position, so that an uneven pressure would be placed on the obturator diaphragm element.
2. The preference for a toroidal shape in preference to a plain disc to facilitate quick expansion when wetted, and a controlled drying out time has the disadvantage illustrated in Figure 1b, in that the central section of the obturator diaphragm element is unsupported. This allows the diaphragm to bulge up under significant inlet water pressure, leading to a higher risk of leakage past the intended sealing surface. It is noted that the actual pressure on the pill extends over an area which can be over four times the area of the inlet (typical diameter 4 to 5 mm as opposed to 2mm).
3. The pressure realised upon the obturator membrane element would tend to be greater at the periphery than at the centre, which is the exact opposite of what would be optimally desired and in particular, makes operation of such a valve more prone to surface imperfections on the inner assembly.

In contradistinction, tests upon the new design have surprisingly demonstrated that not one valve out of a hundred tested leaked at 0.6bar. Indeed the devices of the new design of the present invention were also completely reliable at much higher pressures as high as at least 2bar which is some ten times that previously attainable.

This allows the valve to be used directly from the water mains either without or with a pressure reduction unit. It also allows the valve to be fed directly from a pressurised feed tank well below the level of the valve. This is convenient for placing the water/nutrient solution feed tank on the flooring under a bench being utilised for growing plants. It can also be used for growing plants on a structure such as a wall in a shopping mall or the exterior walls or roofs of buildings for attractive decoration purposes.

In the tests, the following procedure was adopted.

The valve is conditioned to the closed state by soaking in clean water for 1 hour. It is then pressurised to the point at which it begins to leak at a rate of 10ml per second. To overcome hysteresis effects it is then tested for 10 seconds at the set pressure just below this pressure. If it passes at this test pressure the next higher pressure test is applied for 10 seconds. The higher pass pressure is recorded. Pressures above 7 bar were not tested

The results are presented in the Tables 1 and 2 below.

**Table 1**

| **Figure 1** **type valve - pressure test results** | | | |
|---|---|---|---|
| No. of devices tested 18 | | | |
| Test pressure (bar) | Number passing test | Pass Rate | Fail Rate |
| 0.1 | 18 | 100% | 0% |
| 0.2 | 16 | 89% | 11% |
| 0.3 | 11 | 61% | 39% |
| 0.4 | 5 | 28% | 72% |
| 0.5 | 3 | 17% | 83% |
| 0.6 | 1 | 6% | 94% |
| 0.7 | 0 | 0% | 100% |
| 0.8 | 0 | 0% | 100% |
| 0.9 | 0 | 0% | 100% |
| 1 | 0 | 0% | 100% |

**Table 2**

| **Figure 2** **type valve - pressure test results** | | | |
|---|---|---|---|
| No. of devices tested 50 | | | |
| Test pressure (bar) | Number passing test | Pass Rate | Fail Rate |
| 1 | 50 | 100% | 0% |
| 2 | 50 | 100% | 0% |
| 3 | 46 | 92% | 8% |
| 4 | 41 | 82% | 18% |
| 5 | 32 | 64% | 36% |
| 6 | 26 | 52% | 48% |
| 7 | 18 | 36% | 64% |

The key improvement which is considered to achieve the benefits outlined above is the provision of the domed valve disc component interposed between the swellable hydrogel actuator element and the water-impermeable flexible film obturator element. Any appropriately high modulus material could be used to form the valve disc component. The rigid shape-retaining material for making the valve disc component at the core of this invention can be one that is both physically and chemically stable in an aqueous environment to resist deformation or degradation for periods of years to retain the disc's function appropriately. Metals such as steel, zinc, and many other metals and their alloys which can resist a significant distortion when under loads of >4 bar as a 0.1 millimetre thickness sheet, are suitable. High modulus water resistant polymers with or without fibre or particulate reinforcement as well as ceramics and glasses are also suitable materials which can be manufactured into small domed discs by techniques well known to those skilled in the art.

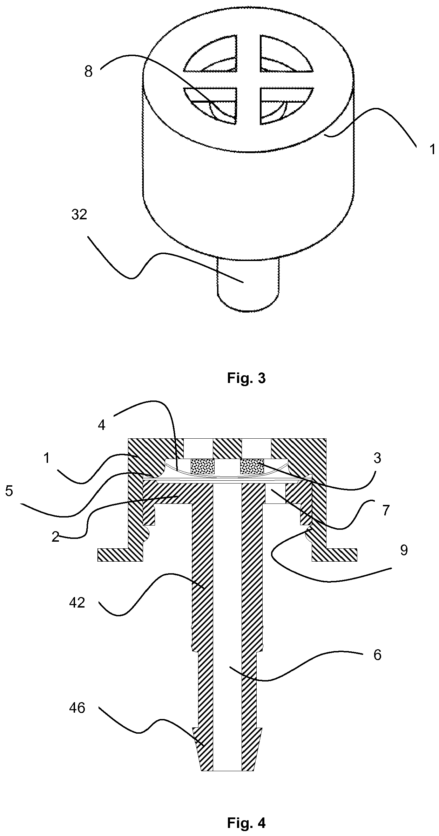

A perspective view of a valve body is shown in Figure 3, illustrating positioning of vent ports 8 in a flat end surface of a cylindrical body 1, and showing an inlet supply pipe **32** connected to the opposite end surface of the body.

In a further embodiment of the device of the invention, as illustrated in Fig. 4, wherein like or equivalent parts are numbered as for Figs. 2a and 2b, the body part 2 is moulded to include an inlet pipe **42** with a barbed end **46** for receiving a fluid supply tubing in a push fit connection.

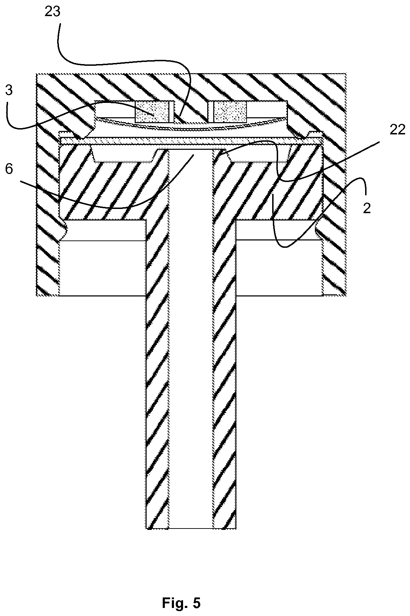

In another embodiment of the device of the invention, as illustrated in Fig. 5 the body part 2 is formed to provide an elevated seat **22** about inlet 6 to receive the flexible film 5 thereupon as obturator element with the object of improving sealing. The corresponding body part 1 has another optional feature in the form of a protuberance **23** projecting inwardly and configured to contact the toroidal shaped hydrogel actuator element 3 so as facilitate centring thereof within the chamber defined within the body parts 1, 2.

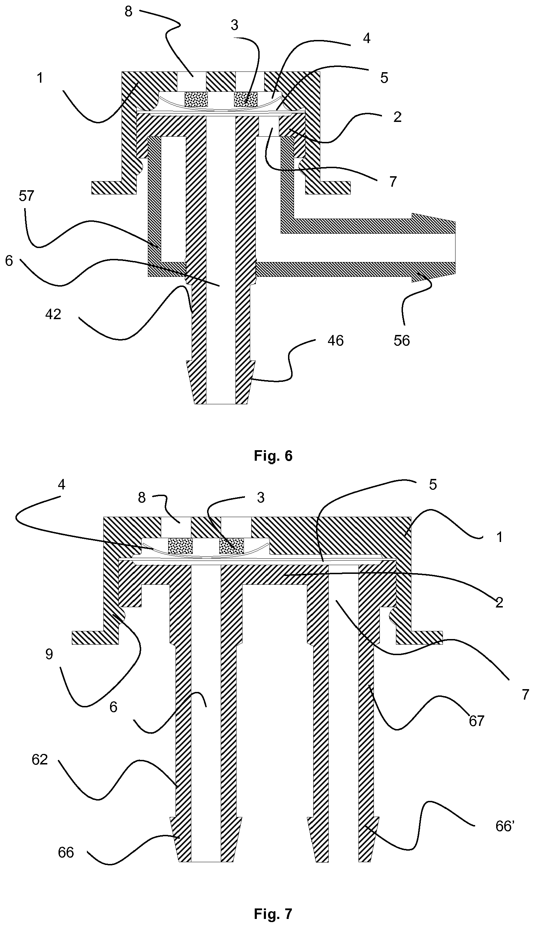

In a still further embodiment illustrated in Fig.6 a control valve of this invention adapted to connect with fluid supply tubing is equipped with an outlet port banjo connector **57** for outlet tubing with a barbed end **56** for connection to a further device (not shown);

In yet another embodiment illustrated in Fig. 7 is a control valve which is adapted to connect with fluid inlet and outlet tubing for through-flow by provision of integrated inlet and outlet pipes **62, 67** respectively with barbed ends **66, 66'** for receiving tubing in a push fit connection for connection to a further device (not shown);

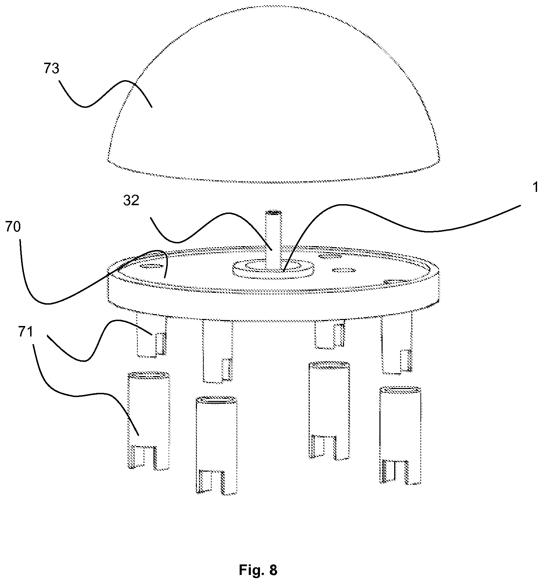

A valve of the type such as that shown in Figs. 2a, 2b and 3 may be supported for use above a tray surface by means of the vertical mount support platform **70** shown in Fig. 8 which is height adjustable by insertion or removal of interlocking leg units **72.** In this way the valve can be set at a predetermined flood height with respect to the tray surface. A domed cover **73** is provided for the support platform 70.

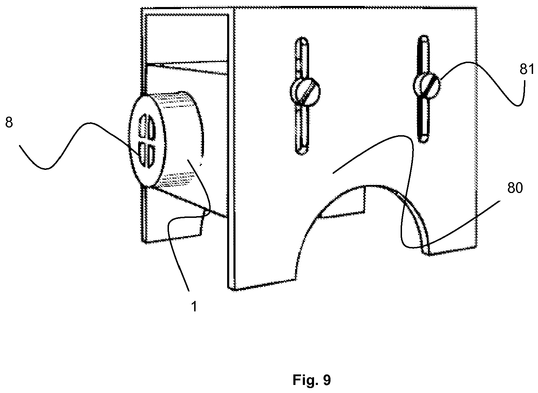

Alternatively, for the same purpose, the valve may be supported in a horizontal mount in the support platform **80** shown in Fig. 9 where height adjustment is achievable by means of slidable locking screws **81.** The support platform of this embodiment is of metal construction with side support walls including slots providing for height adjustment of a horizontal mounting block fastened to the support walls by way of the locking screws, the height adjustment being achievable by loosening and sliding locking screws up or down within the slots as required before re-tightening.

Advantages observed with the embodiments of the new design include:
1. In the dry and vertical condition, the gel pill, disc or toroidal hydrogel actuator element is oriented correctly in a position which is properly centred within the rigid concave disc component.
2. When the hydrogel is wet and swollen, the area of applied pressure is automatically applied to a very small area over the centrally placed water-inlet and the pressure is amplified, resulting in much improved sealing against higher water pressures. The "osmotic" pressure of the swollen expanded hydrogel pill, disc or toroidal shaped actuator is intensively increased as it is focussed only onto the very small area of the rim of the centrally located water inlet/outlet. This is a direct consequence of the configuration of the dished valve disc structure within which the hydrogel actuator is confined.
3. From the other perspective, considering the effect upon the obturator element, the use of a domed shape for the valve disc component also converts some of the sideways expansion of the gel pill into additional axial pressure and travel that would not be achievable by use of a flat disc.
4. Using common valve assembly moulding parts, the response and characteristics of the valve can be adjusted by making changes in the thickness and topography of the gel pill, disc or doughnut and the domed metal disc as well as the diameter of the water inlet tube at the point of entry to the water flow compartment.

The dimensions of the mechanism may be scaled to allow a size providing adequate space for both an inlet and an outlet tube or optionally more than one outlet tube. One of these ideally should be roughly central while the other(s) is (are) off-centre. The valve design with only one each of an inlet and an outlet tube can now still operate effectively if the direction of water flow is reversed with the off-centre tube becoming the water inlet while the central tube becomes the outlet. The mode of operation in which the centrally located tube is the inlet is the preferred mode of operation. The addition of two tubes (or more) to the device allows a mode of operation in which the outlet tube is connected to a line of well known simple dripper valve mechanisms whose flow and the on/off control of this flow lies entirely with the sensor/transducer/controller valve. By this means a number of trays or pots may be watered by a single master on/off sensing/flow controlling valve of this invention.

### Examples

In a practical test of the new design of valve device the following procedure was adopted.

Two clean trays were lined with new capillary matting; the trays and matting were of the types commonly used in horticulture. Tray dimensions 40 cm wide by 100cm long by 5 cm high.

Two valves of this invention were connected to a reservoir of water by standard capillary tubing (6mm), and one valve of the invention was secured into position on each of the trays.

Suitable drain-holed pots of various sizes filled with a compost medium and the subject plants were arranged in the trays.

A watering regime was set up which would assist in the aeration of the compost to promote good root growth. For this purpose the valves were placed on the trays with the centre of the hydrogel actuator approximately 1 cm from the bottom of the tray. They were also situated in an open position in order to facilitate exposure of the hydrogel actuator to the ambient temperature and humidity as experienced by the plant. The watering cycle is arranged to start with an open valve allowing the tray to flood until the presence of water on the hydrogel actuator causes it to swell and close the valve. As the plants take up the water, the capillary matting dries out. This in turn causes the hydrogel actuator to dry out and re-open the valve and start a new watering cycle.

A mixed selection of popular house/pot plants were added, these plants were in different pot sizes and shapes. Some of the plants were older specimens; some were cuttings and some were younger plants.

### Plants used Tray 1.

Sansevieria Trifasciata Laurentii.

Begonia Rex.

Echinopsis, (Cacti).

Aglaonema, "Silver Queen".

Saintpaulia.

Cordyline Terminalis Tricolor.

Bougainvillea.

Jasmine.

### Plants used Tray 2.

Sansevieria Trifasciata Laurentii.

Saintpaulia.

Begonia Rex.

Chlorophytum.

Hippeastrum

Spathiphyllum.

Aeschynanthus Lobbianus - Lipstick Vine.

Howea, Palm.

A monthly photographic record was kept. These photographs clearly demonstrated that the devices of the invention continually allowed all of the plants to grow good quality new leaves, stems and flowers, the devices of the invention required no human intervention other than topping up the reservoir. If the devices of the invention were connected to a mains water supply, they would have supplied all the plants the correct amounts of water for more than 10 weeks; for 24 hours a day; 7 days a week. These accurate results were obtained despite the variations in growing conditions (variations in season, heat, light, temperature and humidity). The valve device of this invention was also not affected by chemicals used in horticulture, fertilisers, insecticides or fungicides.

The devices of the invention, demonstrated their reliability and considerable cost savings by replacing other compatible horticultural irrigation systems which require: -
- Complex and expensive electric components; piping, tubing and connectors and switches for water control;
- Complex skills for maintenance and setting up;
- Additional running costs (electricity);
- Provision for drainage and effluent;
and are more complex, and by being so, are more prone to breaking down and become unreliable.

## Claims

1. A flow control device comprising a body (1, 2) adapted for fluidic connection to a fluid flow system, said body (1, 2) defining an internal chamber and configured to pass flow of fluid through the chamber via at least one aperture (6) in the body (1, 2), an obturator element (5) positioned in the chamber and adapted to close upon the at least one aperture (6), an actuator element (3) juxtaposed with the obturator element (5) and formed of a material which swells when in contact with fluid and contracts in the absence of said fluid, whereby upon introduction of fluid to the chamber, the actuator element (3) swells and effects closing of the obturator element (5) upon the at least one aperture (6), and wherein the device further comprises a valve disc component (4) disposed between the actuator element (3) and the obturator element (5) and configured to bear upon the obturator element (5) and facilitate closure thereof upon the at least one aperture (6), **characterised in that** the valve disc component (4) is a concave dish or shallow cup superposed over the actuator element (3).

2. A flow control device according to claim 1, wherein the chamber has both an inlet aperture (6) and an outlet aperture (7) in one surface within the chamber, so that the obturator element (5) may overlie and close off both apertures (6, 7), especially the former.

3. A flow control device according to claim 1 or claim 2, wherein the chamber has multiple outlet apertures, or an outlet manifold to deliver fluid to several devices.

4. A flow control device according to any one of the preceding claims wherein the chamber is adapted to connect with small bore tubing for distribution in a reticulation system.

5. A flow control device as claimed in claim 1, and comprising a body (1) with a base and upstanding side wall(s) defining said chamber therebetween and a closure element (2) for the chamber to complete assembly after insertion of the swellable actuator element (3), the flexible obturator element (5) and the valve disc component (4) into the chamber.

6. A flow control device as claimed in claim 5, wherein the body (1) is adapted for fluidic connection to a fluid flow system by provision of at least one inlet aperture (6) and at least one outlet aperture (7), said apertures (6, 7) being so located in the body (1) to define in conjunction with the chamber a flow path through the device, and there is at least one vent aperture (8) to permit fluid vapour exchange from the chamber with ambient air.

7. A flow control device as claimed in any preceding claim, wherein the body (1, 2) has a protuberance (23) projecting inwardly and configured to contact the actuator element (3) so as facilitate centring thereof within the chamber defined within the body (1, 2).

8. A flow control device as claimed in any preceding claim wherein an elevated seat (22) is formed about the inlet (6).

9. A flow control device as claimed in any preceding claim, wherein the body (1, 2) comprises at least one vent aperture (8) to permit fluid vapour exchange from the chamber with ambient air.

10. A flow control device as claimed in claim 1, wherein the body comprises first and second body portions (1, 2), moulded in plastics, of generally circular cross-section and together defining a cylindrical chamber for receiving the actuator element (3), the valve disc component (4) and the obturator element (5), wherein the second body portion (2) serving as a closure element for the chamber has an inlet duct (6) and an outlet (7) formed in it and the first body portion (1) has a substantially flat face in which are provided a plurality of vent ports (8), the body portion (1) being open at the opposite side to receive the body portion (2), and has an inner ledge against which the latter may abut when assembled leaving a void space to form the chamber, and wherein around the inner periphery of the open side of the body portion (1) a rib (9) is formed to serve as a snap-fit retainer for the body portion (2) when assembled therewith.

11. A flow control assembly comprising a flow control device as claimed in any one of claims 1 to 10 and a vertical mount support platform (70) which is height adjustable by insertion or removal of interlocking leg units (72) and has an aperture in a top surface for mounting the flow control device.

12. A flow control assembly comprising a flow control device as claimed in any one of claims 1 to 10 and a horizontal mount (80) supported by upright sidewalls including slots whereby height adjustment is achievable by means of slidable locking screws (81).

## Patentansprüche

1. Strömungssteuervorrichtung, umfassend einen Körper (1, 2), der für eine fluidische Verbindung mit einem Fluidströmungssystem angepasst ist, wobei der Körper (1, 2) eine innere Kammer definiert und so konfiguriert ist, dass er durch mindestens eine Öffnung (6) in dem Körper (1, 2) eine Strömung von Fluid führt, ein in der Kammer positioniertes Obturatorelement (5) und das angepasst ist, um sich an der mindestens einen Öffnung (6) zu schließen, ein dem Obturatorelement (5) gegenüberliegendes Aktorelement (3) und das aus einem Material gebildet ist, das bei Kontakt mit Fluid anschwillt und sich bei Abwesenheit des Fluids zusammenzieht, wobei das Aktorelement (3) beim Einführen von Fluid in die Kammer anschwillt und das Schließen des Obturatorelements (5) an der mindestens einen Öffnung (6) bewirkt, und wobei die Vorrichtung ferner eine zwischen dem Aktorelement (3) und dem Obturatorelement (5) angeordnete Ventilscheibenkomponente (4) umfasst und die so konfiguriert ist, dass sie auf dem Obturatorelement (5) aufliegt und dessen Verschluss an der mindestens einen Öffnung (6) erleichtert, **dadurch gekennzeichnet, dass** die Ventilscheibenkomponente (4) eine konkave Schale oder ein untiefer Becher, die/der über dem Aktorelement (3) liegt, ist.

2. Strömungssteuervorrichtung nach Anspruch 1, wobei die Kammer sowohl eine Einlassöffnung (6) als auch eine Auslassöffnung (7) in einer Oberfläche innerhalb der Kammer aufweist, sodass das Obturatorelement (5) beide Öffnungen (6, 7), insbesondere die erstere, überlagern und absperren kann.

3. Strömungssteuervorrichtung nach Anspruch 1 oder Anspruch 2, wobei die Kammer mehrere Auslassöffnungen oder einen Auslassverteiler zum Liefern von Fluid an mehrere Vorrichtungen aufweist.

4. Strömungssteuervorrichtung nach einem der vorhergehenden Ansprüche, wobei die Kammer angepasst ist, um sich mit einem kleinen Bohrrohr zur Verteilung in einem Retikulationssystem verbinden zu lassen.

5. Strömungssteuervorrichtung nach Anspruch 1, und umfassend einen Körper (1) mit einer Basis und einer aufrechten Seitenwand/aufrechten Seitenwänden, die die Kammer dazwischen definiert/definieren, und ein Verschlusselement (2) für die Kammer, um die Befestigung nach dem Einsetzen des schwellbaren Aktorelements (3), des flexiblen Obturatorelements (5) und der Ventilscheibenkomponente (4) in die Kammer zu beenden.

6. Strömungssteuervorrichtung nach Anspruch 5, wobei der Körper (1) für eine fluidische Verbindung mit einem Fluidströmungssystem angepasst ist, indem mindestens eine Einlassöffnung (6) und mindestens eine Auslassöffnung (7) bereitgestellt werden, wobei die Öffnungen (6, 7) so in dem Körper (1) eingerichtet sind, dass sie in Verbindung mit der Kammer einen Strömungsweg durch die Vorrichtung definieren, und wobei mindestens eine Entlüftungsöffnung (8) vorliegt, um den Fluiddampfaustausch aus der Kammer mit Umgebungsluft zu ermöglichen.

7. Strömungssteuervorrichtung nach einem der vorhergehenden Ansprüche, wobei der Körper (1, 2) einen nach innen ragenden Vorsprung (23) aufweist und so konfiguriert ist, dass er das Aktorelement (3) berührt, um die Zentrierung dieses innerhalb der innerhalb des Körpers (1, 2) definierten Kammer zu erleichtern.

8. Strömungssteuervorrichtung nach einem der vorhergehenden Ansprüche, wobei um den Einlass (6) herum ein erhöhter Sitz (22) ausgebildet ist.

9. Strömungssteuervorrichtung nach einem der vorhergehenden Ansprüche, wobei der Körper (1, 2) mindestens eine Entlüftungsöffnung (8) umfasst, um einen Fluiddampfaustausch aus der Kammer mit Umgebungsluft zu ermöglichen.

10. Strömungssteuervorrichtung nach Anspruch 1, wobei der Körper einen ersten und zweiten in Kunststoff geformten Körperabschnitt (1, 2) mit im Wesentlichen kreisförmigem Querschnitt umfasst und die zusammen eine zylindrische Kammer zur Aufnahme des Aktorelements (3), der Ventilscheibenkomponente (4) und des Obturatorelements (5) definieren, wobei der als Verschlusselement für die Kammer dienende zweite Körperabschnitt (2) einen Einlasskanal (6) und einen darin ausgebildeten Auslass (7) aufweist, und wobei der erste Körperabschnitt (1) eine im Wesentlichen flache Fläche aufweist, in der eine Vielzahl von Entlüftungsöffnungen (8) bereitgestellt sind, wobei der Körperabschnitt (1) an der gegenüberliegenden Seite zur Aufnahme des Körperabschnitts (2) offen ist und einen inneren Absatz aufweist, gegen welchen der letztgenannte befestigt anstoßen kann, wobei ein Leerraum zur Ausbildung der Kammer gelassen wird, und wobei um den Innenumfang der offenen Seite des Körperabschnitts (1) eine Rippe (9) ausgebildet ist, um als Schnappverschlusshalter für den Körperabschnitt (2), wenn er damit befestigt ist, zu dienen.

11. Strömungssteueranordnung, umfassend eine Strömungssteuervorrichtung nach einem der Ansprüche 1 bis 10 und eine vertikale Befestigungstragplattform (70), die durch Einsetzen oder Entfernen von ineinandergreifenden Schenkeleinheiten (72) höhenverstellbar ist und in einer oberen Oberfläche eine Öffnung zur Befestigung der Strömungssteuervorrichtung aufweist.

12. Strömungssteueranordnung, umfassend eine Strömungssteuervorrichtung nach einem der Ansprüche 1 bis 10 und eine von aufrechten Seitenwänden getragene horizontale Befestigung (80), einschließlich Schlitzen, wodurch eine Höhenverstellung mittels verschiebbarer Verriegelungsschrauben (81) erreichbar ist.

## Revendications

1. Dispositif de régulation d'écoulement comprenant un corps (1, 2) conçu pour un raccordementfluidique à un système d'écoulement de fluide, ledit corps (1, 2) définissant une chambre interne et étant configuré pour faire passer un écoulement de fluide à travers la chambre par le biais d'au moins une ouverture (6) dans le corps (1, 2), un organe d'obturateur (5) positionné dans la chambre et conçu pour se refermer sur ladite au moins une ouverture (6), un organe actionneur (3) juxtaposé à l'organe d'obturation (5) et formé d'un matériau qui gonfle lorsqu'il est en contact avec un fluide et qui se contracte en l'absence dudit fluide, si bien que lors de l'introduction de fluide dans la chambre, l'organe d'actionnement (3) se gonfle et entraîne la fermeture de l'organe d'obturation (5) sur ladite au moins une ouverture (6) et dans lequel le dispositif comprend en outre un composant de disque de vanne (4) disposé entre l'organe d'actionnement (3) et l'organe d'obturation (5) et configuré pour faire pression sur l'organe d'obturation (5) et pour faciliter la fermeture de celui-ci sur ladite au moins une ouverture (6), **caractérisé en ce que** le composant de disque de vanne (4) est une coupe concave ou une cuvette peu profonde superposée au-dessus de l'organe d'actionnement (3).

2. Dispositif de régulation d'écoulement selon la revendication 1, dans lequel la chambre possède à la fois une ouverture d'entrée (6) et une ouverture de sortie (7) sur une surface à l'intérieur de la chambre, de telle sorte que l'organe d'obturation (5) puisse recouvrir et fermer les deux ouvertures (6, 7), en particulier la première.

3. Dispositif de régulation d'écoulement selon la revendication 1 ou la revendication 2, dans lequel la chambre possède des ouvertures de sortie multiples, ou un collecteur de sortie pour apporter du fluide à plusieurs dispositifs.

4. Dispositif de régulation d'écoulement selon l'une quelconque des revendications précédentes dans lequel la chambre est conçue pour se raccorder à une tubulure de faible alésage en vue d'une distribution dans un système de réticulation.

5. Dispositif de régulation d'écoulement selon la revendication 1, et comprenant un corps (1) avec une base et une/des paroi(s) latérale(s) verticales définissant la chambre entre elles et un organe de fermeture (2) pour la chambre afin d'achever le montage après l'insertion de l'organe d'actionnement gonflable (3), de l'organe d'obturation flexible (5) et du composant de disque de vanne (4) dans la chambre.

6. Dispositif de régulation d'écoulement tel que revendiqué dans la revendication 5, dans lequel le corps (1) est conçu pour un raccordement fluidique avec un système d'écoulement de fluide en fournissant au moins une ouverture d'entrée (6) et au moins une ouverture de sortie (7), lesdites ouvertures (6, 7) étant situées dans le corps (1) afin de définir en association avec la chambre un chemin d'écoulement à travers le dispositif, avec la présence d'au moins une ouverture d'aération (8) pour permettre un échange de vapeur de fluide provenant de la chambre avec l'air ambiant.

7. Dispositif de régulation d'écoulement tel que revendiqué dans une quelconque revendication précédente, dans lequel le corps (1, 2) présente une saillie (23) se projetant vers l'intérieur et étant configurée pour venir en contact avec l'organe d'actionnement (3) de manière à faciliter le centrage de celui-cià l'intérieur de la chambre définie à l'intérieur du corps (1, 2).

8. Dispositif de réguation d'écoulement tel que revendiqué dans une quelconque revendication précédente dans lequel un siège surélevé (22) est conformé autour de l'entrée (6).

9. Dispositif de régulation d'écoulement tel que revendiqué dans une quelconque revendication précédente, dans lequel le corps (1, 2) comprend au moins une ouverture d'aération (8) pour permettre un échange de vapeur de fluide provenant de la chambre avec l'air ambiant.

10. Dispositif de régulation d'écoulement tel que revendiqué dans la revendication 1, dans lequel le corps comprend des première et deuxième parties de corps (1, 2), moulées dans une matière plastique, de coupe transversale généralement circulaire et définissant ensemble une chambre cylindrique pour la réception de l'organe d'actionnement (3), du composant de disque de vanne (4) et de l'organe d'obturation (5), dans lequel la deuxième partie de corps (2) servant d'élément de fermeture à la chambre a un conduite d'entrée (6) et une sortie (7) formées dans celle-ci et la première partie de corps (1) présente une face sensiblement plate dans laquelle sont fournis une pluralité d'orifices d'aération (8), la partie de corps (1) étant ouverte du côté opposé pour recevoir la partie de corps (2), et a une bordure interne contre laquelle cette dernière puisse abutter lorsqu'elle est assemblée, laissant un espace vide afin de former la chambre, et dans lequel autour de la périphérie interne du côté ouvert de la partie de corps (1), une nervure (9) est conformée pour servir de verrouillage encliquetable pour la partie de corps (2) lorsqu'elle est assemblée avec celui-ci.

11. Ensemble de régulation d'écoulement comprenant un dispositif de régulation d'écoulement tel que revendiqué dans l'une quelconque des revendications 1 à 10 et une plateforme de support à montage vertical (70) qui est réglable en hauteur par l'insertion ou le retrait d'unités de piétement emboîtables (72) et qui a une ouverture dans une surface supérieure pour le montage du dispositif de régulation d'écoulement.

12. Ensemble de régulation d'écoulement comprenant un dispositif de régulation d'écoulement tel que revendiqué dans l'une quelconque des revendications 1 à 10 et un montage horizontal (80) soutenu par des parois latérales verticales incluant des fentes si bien que le réglage de la hauteur peut être effectué au moyen de vis de serrage coulissantes (81).
